# EUROPÄISCHE PATENTSCHRIFT

(11) **EP 2 340 237 B1**
(45) Veröffentlichungstag und Bekanntmachung des Hinweises auf die Patenterteilung: **22.06.2016**
(21) Anmeldenummer: 09778496.1
(22) Anmeldetag: 11.09.2009
(51) Int. Cl.: C04B 11/00, F27D 19/00

(54) **VERFAHREN UND ANLAGE ZUR HERSTELLUNG VON HARTGIPS**
METHOD AND SYSTEM FOR THE PRODUCTION OF HARD PLASTER
PROCÉDÉ ET INSTALLATION DE PRODUCTION DE GYPSE DUR

(30) Priorität: 11.09.2008 EP 08016047
(43) Veröffentlichungstag der Anmeldung: 06.07.2011
(73) Patentinhaber: Claudius Peters Projects GmbH, 21614 Buxtehude (DE)
(72) Erfinder: GÖCKE, Volker, 21702 Ahlerstedt (DE); GEHLE, Tobias, 21714 Hammah (DE)
(74) Vertreter: Glawe, Delfs, Moll
(86) Internationale Anmeldenummer: PCT/EP2009/006621
(87) Internationale Veröffentlichungsnummer: WO 2010/028847

(56) Entgegenhaltungen:
- EP-A- 0 572 781
- DE-A1- 2 049 028
- DE-A1- 3 738 301
- US-A- 6 030 636
- US-A1- 2005 152 827
- US-A1- 2008 152 559
- US-B2- 7 824 490

## Beschreibung

Die Erfindung betrifft ein Verfahren zur Herstellung von Hartgips aus gebranntem Beta-Hemihydrat. Es umfasst ein Zuführen des gebrannten Gipsmaterials bestehend überwiegend aus Beta-Hemihydrat zu einem Nachreaktor, Nachbehandeln im Nachreaktor, wobei das Beta-Hemihydrat direkt zu Alpha-Hemihydrat umgewandelt wird, sowie Ausbringen des Hartgipses mit anschließendem Kühlen.

Es ist bekannt, dass Stuckgips in verschiedenen Formen auftreten kann, die sich in sogenannter Alpha- und Beta-Modifikationen des Hemihydrats unterscheiden (DE-B-1771625). Der Kürze halber werden diese Modifikationen des Stuckgipses auch bezeichnet als Alpha-Gips (Hartgips) bzw. Beta-Gips. Beide Arten sind in Bezug auf die chemischen und mineralogischen Eigenschaften ihrer Halbhydrate identisch. Sie unterscheiden sich jedoch im Gefüge- und Kristallaufbau der einzelnen Partikel. Bei Beta-Gips sind die bei dem Kalzinieren gebildeten Halbhydratkristalle in der Regel klein ausgebildet und mit zahlreichen Kristallgitterfehlern behaftet. Dies gilt insbesondere für schnellkalzinierten Gips (Flash-Kalzinierung), wie er durch Mahl-, Drehrohr-, Kocher- und Fluidisierkalzinierung erhalten wird. Hierbei zeigen sich schwach bis stark zerklüftete poröse Strukturen in Kristallen. Dem gegenüber zeichnet sich Alpha-Gips dadurch aus, dass die Halbhydrat-Kristalle gut ausgebildet sind und nur wenige Gitterfehlstellen aufweisen. Die Alpha-Kristallform verleiht dem Gips eine hohe Druckbeständigkeit (daher auch die Bezeichnung Hartgips), und macht ihn so zu einem wertvollen Baustoff.

Üblicherweise wird Hartgips hergestellt aus Rohgips (Dihydrate). Hierzu sind verschiedene Verfahren bekannt. Ein erstes Verfahren arbeitet mit wässrigen Gipssuspensionen, die in einem Autoklaven bei Temperaturen von 105°C bis 165°C und einem Überdruck von gut 1 bis 6 bar bearbeitet werden. Es gibt auch ein druckloses Verfahren, bei dem eine Gipssuspension in Schwefelsäure mit anderen Säuren bei Temperaturen unter 105°C umgewandelt wird. Außerdem gibt es noch sogenannte quasi-trockene Verfahren (DE-A-3819652, DE-A-3819653, EP-A-0572781), bei denen entwässerter Gips mit einer verhältnismäßig geringen Restfeuchte von weniger als 20 % in Autoklaven bei Temperaturen zwischen 105°C und 165°C und einen Überdruck von 1 bis 6 bar umgewandelt wird. All diesen Verfahren ist gemeinsam, dass das Rohmaterial (Dihydrat) direkt umgewandelt wird in Hartgips (Alpha-Halbhydrat), wobei ggf. noch Zuschlagsstoffe wie z. B. ein 5%-Anteil an Beta-Halbhydrat erforderlich sind. Weiter ist den Verfahren gemeinsam, dass sie aufwendig sind und hohe Kosten verursachen, sowohl in Bezug auf Energie wie auch verwendete Materialien (Säuren).

Es ist weiter ein Verfahren bekannt, bei dem Beta-Gips einer im Rahmen einer Nachbehandlung einer künstlichen Alterung unterzogen wird, um die mechanische Druckfestigkeit zu erhöhen (DE-B-1771625). Das Verfahren sieht zuerst eine Kalzinierung zu herkömmlichem Stuckgips (Beta-Gips) vor, wobei im nachfolgenden Prozess aus dem Beta-Halbhydrat teilweise Alpha-Halbhydrat erzeugt wird. Um dies zu erreichen, wird bei der Nachbehandlung Wasser zugegeben, und zwar soviel, um die Temperatur der Suspension in einem Be-Bereich unterhalb der Kalzinierungstemperatur abzusenken. Dadurch wird eine Rehydratisierung des Beta-Halbhydrats zu Dihydrat in Gang gesetzt. Nachfolgend wird der abgekühlte Gips wieder erwärmt auf eine Temperatur oberhalb der Kalzinierungstemperatur, sodass aus dem durch die Abkühlung rehydratisierten Dihydrat wiederum Halbhydrat gebildet wird, und zwar in der Alpha-Modifikation. Ein Nachteil dieses Verfahrens liegt darin, dass der erreichte Anteil der Alpha-Modifikation nicht sehr hoch ist, sodass es nur eine geringe Effizienz aufweist, überdies weist das Produkt noch verhältnismäßig hohe BET-Werte auf, die beträchtlich über denen von herkömmlichen Hartgips liegen.

Zur wahlweisen Herstellung von Beta- oder Alpha-Gips ist ein Verfahren bekannt (DE-A-3738301), bei dem das Dihydrat in einem Kalzinator mit heißem Fluidisiergas beaufschlagt wird. Durch Einstellung von Temperatur und Druck wird gesteuert, ob sich Beta- oder Alphagips bildet. Für Alphagips sind im Kalzinator Temperaturen von über 250 °C erforderlich, bei einem Druck von 2 bis 6 bar. Damit ähnelt das Verfahren der bekannten Verwendung von Autoklaven und teilt deren Nachteile. Zudem ist die Reinheit in Bezug auf den Anteil der Alpha-Modifikation nur unbefriedigend.

Eine mehrstufige Anlage zum Kalzinieren ist aus der US-A-2008152559 bekannt. Mehrere Reaktoren sind in Reihe geschaltet, um das Gipsmaterial chargenweise zu Anhydrit zu brennen. Zur Beheizung kann Heißdampf zugeführt werden. Die Reaktoren können mit integrierten Mahlanlagen versehen sein, um das Anhydrit zu einer möglichst einheitlichen kleinen Partikelgröße zu vermahlen. Die Anlage ist ausgelegt für Temperaturen von über 550 °F (288 °C) und Drücke von 70 bar. Die Verweildauer des Gipsmaterials in der Anlage zur Umwandlung in Anhydrit beträgt zwischen 10 s und 10 min. Der damit erzeugte anhydritische ("totgebrannte") Alphagips weist nicht die vorteilhaften Eigenschaften von Alpha-Hemihydratgips auf.

Weiter ist aus der US-A-6030636 ein Verfahren zur Herstellung von Tabletten bekannt, in dem Alphagips mit einer spezifischen Oberfläche (BET) von 0,4 m²/g und 0,9 m²/g verwendet wird. Der Alphagips wird mit Betagips und Wasser gemischt, um danach gepresst zu werden. Der Wasser-Gipswert beträgt dabei zwischen 0,27 und 0,3.

Schließlich ist ein Verfahren zur Herstellung von Alphagips bekannt, bei dem Betagips direkt zu Alphagips umgewandelt wird (DE-A-2049028). Dazu werden Formlinge aus mit Wasser vermischtem Betagips in einem Autoklaven über mehrere Stunden zu Alphagips umgewandelt, wobei die Zugabe von Zuschlagsstoffen vorgesehen ist.

Der Erfindung liegt die Aufgabe zugrunde, ausgehend von dem zuletzt genannten Stand der Technik ein verbessertes Verfahren und eine entsprechende Anlage anzugeben, welche eine effizientere Herstellung von Hartgips erlauben.

Die erfindungsgemäße Lösung liegt in den Merkmalen der unabhängigen Ansprüche. Vorteilhafte Weiterbildungen sind Gegenstand der abhängigen Ansprüche.

Bei einem Verfahren zur Herstellung von Hartgips, umfassend ein Zuführen von Gipsmaterial, das überwiegend aus BetaHemidydratgipses besteht, zu einem Nachreaktor, Nachbehandeln im Nachreaktor zur Bildung von Hartgips, wobei der Beta-Hemidydratgips direkt zu Alpha-Hemihydratgips bei einer Temperatur oberhalb der Kalziniertemperatur von 95 °C umgewandelt wird, und Ausbringen des Hartgipses aus dem Nachreaktor und Kühlen, ist gemäß der Erfindung vorgesehen ein Einstellen der Temperatur auf mindestens die Kalziniertemperatur beim Zuführen des Gipsmaterials zum Nachreaktor, Umwandeln in dem Nachreaktor mit einer Verweilzeit von mehr als 15 Minuten und höchstens 30 Minuten unter Zuführung von Wasserdampf von extern und Regeln der Temperatur sowie des Drucks im Nachreaktor derart, dass die Temperatur mindestens 95 °C beträgt und ein Überdruck zwischen 1,5 bar und 2 bar Absolutdruck herrscht, wobei das Umwandeln im Nachreaktor im kontinuierlichen Betrieb durchgeführt wird.

Zuerst seien einige Begriffe definiert. Die Kalziniertemperatur ist die Temperatur, ab der sich im Gips das Dihydrat zu Hemihydrat umwandelt. Sie beträgt bei üblichem Calciumsulfat-Gips etwa 95 °C. Unter "überwiegend" bestehen wird ein Mindestanteil von 50 % verstanden, vorzugsweise 90 % und weiter vorzugsweise 95 %, wobei auch 100 % bzw. technische Reinheit umfasst sein sollen.

Der Kern der Erfindung liegt im Gedanken, durch die beanspruchten Schritte eine direkte Umwandlung von Beta-Halbhydrat in Alpha-Halbhydrat erreicht wird, ohne dass dabei ein Umweg über eine Rehydrierung zu Dihydrat genommen wird.

Die Erfindung macht sich zu Nutze, dass durch das Einstellen der Temperatur bei der Zufuhr des gebrannten Beta-Gipses zum Nachreaktor auf einen Wert oberhalb der Kalziniertemperatur sicher eine Rehydrierung zu Dihydrat verhindert wird. Die Erfindung hat weiter erkannt, dass damit die Möglichkeit eröffnet wird, den heißen (d.h. mindestens Kalziniertemperatur aufweisenden) Beta-Hemidydratgips direkt zu Hartgips in feuchtheißer Atmosphäre unter Überdruckbedingungen umzuwandeln, indem von extern Wasserdampf zugegeben wird. Durch die somit eingebrachte Feuchte wird der Wasserbedarf des Beta-Gipses befriedigt, sodass im Zusammenwirken mit der hohen Temperatur und dem Überdruck Kristallfehler geheilt werden, bis sich schließlich bei einer Verweilzeit von höchstens 30 Minuten aus der Beta-Kristallstruktur die - in Bezug auf ihre mechanischen Eigenschaften vorteilhafte - Alpha-Kristallstruktur ergibt. Es entsteht so Hartgips mit einem Wassergipswert, der wesentlich niedriger als derjenige des Beta-Gipses ist und damit einen erheblichen Anstieg der mechanischen Festigkeit mit sich bringt. Die Herstellung vermeidet die zeit- und energieaufwendige Verwendung von Autoklaven, welche Verweilzeiten von mehreren Stunden erfordern und damit nicht nur aufwendig sind, sondern auch einen kontinuierlichen Betrieb praktisch unmöglich machen. Die Erfindung schafft mit ihrem Verfahren und seiner kurzen Verweilzeit nicht nur eine erhebliche Reduktion des Zeit- und Energieaufwands, sondern ermöglicht die in Bezug auf ihre Eigenschaften vorteilhafte Direktumwandelung von Betagips zu Alphagips dank kurzer Verweilzeiten sogar im kontinuierlichen Betrieb.

Ein weiterer Vorteil der Erfindung ist, dass keine Zuschlagsmaterialien benötigt werden, so dass die Erfindung frei von Zuschlagsmaterialien ausgeführt werden kann.

Das Verfahren zeichnet sich weiter dadurch aus, dass es robust ist in Bezug auf das Ausgangsmaterial. Insbesondere kann statt Naturgips auch in großen Mengen anfallender, synthetischer Grips insbesondere aus Rauchgasentschwefelungsanlagen, oder auch Phosphorgips, wie er bei der Herstellung von Phosphorsäure anfällt, verwendet werden. Da gerade die letztgenannten Sorten in großen Mengen anfallen und deren Entsorgung bisher nicht geringe Kosten verursachte, bieten sich mit dem erfindungsgemäßen Verfahren neue Chancen, daraus Hartgips, als wertvollen Baustoff, zu schaffen.

Der Druckbereich zwischen 1,5 bar und 2 bar hat sich als besonders günstig für die direkte Umwandlung von Beta-Hemihydrat zu Alpha-Hemihydrat erwiesen, und verlangt nur geringen Aufwand in Bezug auf Druckfestigkeit der Komponenten, verglichen mit den herkömmlichen Autoklavenverfahren, die bei Drücken bis zu 6 bar arbeiten.

Das Nachbehandeln mit einer Nachbehandlungszeit von mindestens 15 Minuten ermöglicht, dass nur teilweise kalzinierter Gips sicher zu dem gewünschten Hartgips verarbeitet werden kann.

Zweckmäßigerweise ist vorgesehen, dass das nachzubehandelnde Gut durch Druckschleusen für einen rationelleren kontinuierlichen Betrieb in den Nachreaktor ein- bzw. daraus ausgebracht wird.

Die Temperatur im Nachreaktor liegt vorzugsweise unter 150° C. Ein bewährter Temperaturbereich liegt zwischen 120° C und 140° C.

Das erfindungsmäßige Verfahren ist robust in Bezug auf die Qualität des zugeführten Beta-Gipses. So braucht er nicht vollständig kalziniert zu sein, sondern kann auch nur ankalziniert sein, wie es insbesondere bei der Flash-Kalzinierung auftritt.

Gemäß einer bevorzugten Ausführungsform, ist eine mechanische Agitation des Guts im Nachreaktor vorgesehen, beispielsweise durch Homogenisieren. Hierunter wird das Behandeln des Guts mittels Turbo-Mischern verstanden. Damit wird eine effiziente Zerkleinerung der Kristalle erreicht, sodass die Blaine-Werte für die Oberfläche in der gewünschten Weise herabgesetzt werden können. Zusätzlich kann eine Nachzerkleinerung in einem auf den Nachreaktor folgenden Prozess erfolgen. Insbesondere kann dies vor dem Kühlen des Hartgipses erfolgen, gegebenenfalls aber auch danach. Besonders gute Ergebnisse erzielt man durch Homogenisieren im Nachreaktor selbst, und zwar auch insbesondere bei der Verwendung von synthetischen Gipsen als Rohmaterial.

Bei der Nachbehandlung kann weiter die Durchmischung durch Zuführung von Fluidisiergas in den Nachreaktor verbessert werden. Damit kann ein Anbacken bzw. Ausbildung toter Zonen im Nachreaktor verhindert werden, es kommt zu einer intensiveern Durchmischung und zu einer gleichmäßigeren Temperaturverteilung im Nachreaktor. Das führt zu einer höheren Produktqualität. Das Fluidisiergas ist vorzugsweise heiß.

Es kann dazu Systemabgas verwendet werden, wie es insbesondere beim Brennen des Ausgangsmaterials zum Beta-Hemihydratgips anfällt. Mit Vorteil ist dem erfindungsgemäßen Verfahren eine Vorbehandlung vorgeschaltet, bei der Dihydratgips als Ausgangsmaterial verwendet und zu Gipsmaterial mit überwiegend Beta-Hemihydrat kalziniert wird. Das dabei anfallende Systemabgas kann dem Nachreaktor zugeführt werden, und zwar als Fluidisiergas oder als heißer Wasserdampf. Dies gilt besonders dann, wenn als Brenner eine Kalziniermühle verwendet wird. Dieses Abgas ist recht feucht (Wassergehalt etwa 35 %) und heiß (Temperatur mindestens 150°C). Bei Bedarf kann aber auch zusätzlich noch Wasser bzw. Wasserdampf zugeführt werden. Hierbei kann zur Bildung des Wasserdampfes ein Wärmetauscher vorgesehen sein, durch welchen das Systemabgas geführt wird und so den Wasserdampf für den Nachreaktor erzeugt.

Bewährte Parameter für das Verfahren sind eine Temperatur im Nachreaktor 3 zwischen 120 °C und 140 °C und ein Druck von 1,65 bis 1,85 bar. Die Nachbehandlung wird durchgeführt, bis nach einer Verweilzeit zwischen 10 und 30 Minuten eine spezifische Oberfläche (BET) von höchstens 4 m²/g und/oder ein Wasser-Gipswert von wesentlich kleiner als 0,6, vorzugsweise kleiner als 0,5 erreicht wird.

Schließlich sei noch angemerkt, dass ein wesentlicher Vorzug des Verfahrens darin liegt, dass es bis auf die Zufuhr von Wasserdampf zum Nachreaktor trocken durchgeführt werden kann. Dieser Aspekt ermöglicht eine gute Energieeffizienz und - zusammen mit dem Zuführen des Wasserdampfes bei der Nachbehandlung - die hohe Produktqualität.

Die Erfindung erstreckt sich weiter auf eine Anlage zur Durchführung des vorstehend beschriebenen Verfahrens. Die Anlage umfasst einen Brenner zum Kalzinieren von Dihydratgips als Ausgangsmaterial und einen in Prozesslaufrichtung dahinterliegenden gesonderten Nachreaktor, die über Transportmittel für den kalzinierten Beta-Gips verbunden sind, wobei erfindungsgemäß das Transportmittel thermisch so ausgelegt ist, dass kalzinierter Beta-Gips mit einer Temperatur von mindestens 95 °C dem Nachreaktor zugeführt wird, wobei der Nachreaktor mindestens einen weiteren Anschluss zum Zuführen von Hitze und Feuchte von extern aufweist, und eine Steuereinrichtung vorgesehen ist, die mit einem Dampfkreis derart zusammenwirkt, um bei einer Temperatur über 95°C und einem Überdruck zwischen 1,5 bar und 2 bar Absolutdruck eine Verweilzeit im Nachreaktor von mehr als 15 Minuten und höchstens 30 Minuten einzustellen, wobei der Nachreaktor für einen kontinuierlichen Betrieb ausgebildet ist.

Ein entsprechender Nachrüstreaktor für Kalzinieranlagen zum Herstellen von Hartgips aus bereits kalzinierten Beta-Hemihydratgips bei dem gemäß der Erfindung Anschlüsse zum Zuführen von feuchtem und heißem Gas und wieter eine Steu ereinrichtung vorgesehen sind, die dazu ausgebildet ist, im Nachrüstreaktor einen Überdruck und eine Temperatur über Kalziniertemperatur zu halten, und in der Mitte des Arbeitsraumes ein von unten nach oben verlaufendes Steigrohr vorgesehen ist, dessen Zentrum koaxial mit einer Düse, in die einer der Anschlüsse zum Zuführen von feuchtem und heißem Gas mündet, ausgerichtet ist, ist ebenfalls Gegenstand der Erfindung.

Die Erfindung wird nachfolgend unter Bezugnahme auf die beigefügte Zeichnung erläutert, in der ein vorteilhaftes Ausführungsbeispiel dargestellt ist. Es zeigen:

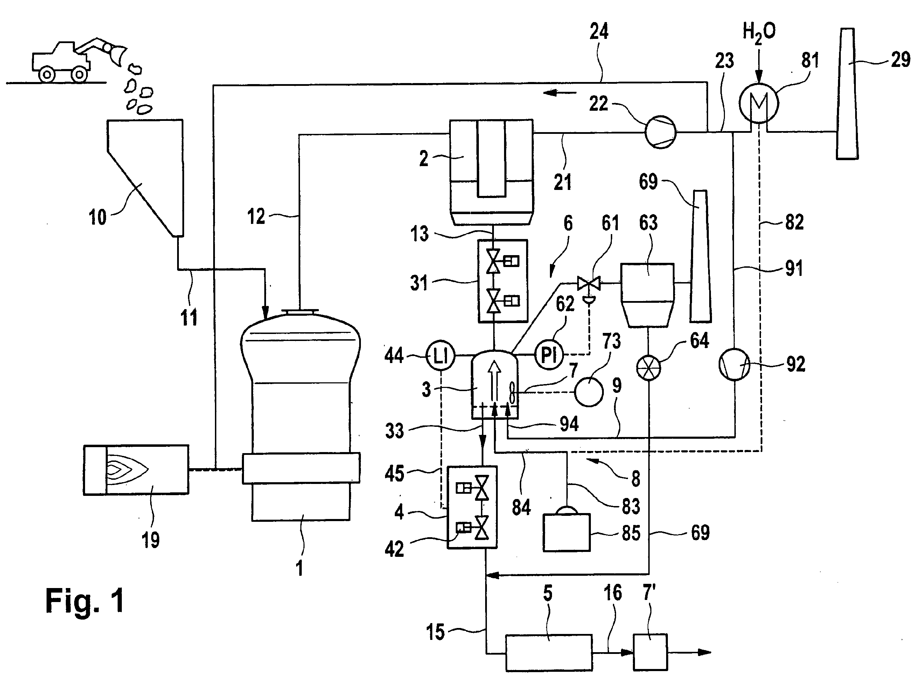

- Fig. 1: eine schematische Übersichtsdarstellung eines Ausführungsbeispiels einer Kalzinieranlage; und
- Fig. 2: eine Schnittansicht eines Nachreaktors der Kalzinieranlage.

Die Erfindung sei anhand eines Ausführungsbeispiels für eine Anlage erläutert, bei der durch eine Kalziniermühle kalzinierter Stuckgips weiterverarbeitet wird zu Hartgips.

Rohmaterial für das zu kalzinierende Gut wird an einer Aufgabestelle 10 in die Kalzinieranlage eingebracht. Bei dem Rohmaterial kann es sich um natürlichen Rohgips handeln, oder es können synthetische Gipse verwendet werden. Von der Aufgabestelle 10 gelangt das Rohmaterial über eine Leitung 11 an den Eingangsanschluss einer Kalziniermühle 1. Die Kalziniermühle 1 ist vorzugsweise als Flash-Kalzinierer ausgebildet. Sie umfasst Einrichtungen zum Zerkleinern und Kalzinieren des Rohmaterials. Um die für eine Flash-Kalzinierung notwendige hohe Temperatur von etwa 150°C bis 160°C zu erreichen, ist an der Kalziniermühle 1 ein Heißgasgenerator 19 angeschlossen. Für eine Flash-Kalzinierung reicht üblicherweise eine Verweilzeit von 10 Sekunden. Es sei angemerkt, dass auch eine an sich beliebig andere Art zur Kalzinierung des Rohmaterials vorgesehen sein kann. Nach der Kalzinierung verlässt der Gips die Kalziniermühle 1 über eine Ausgabeleitung 12. Der kalzinierte Gips (Stuckgips) weist eine Kristallform auf, die als Beta-Modifikation bezeichnet wird. Daher ist der Gips auch unter der Bezeichnung Beta-Hemidydratgips bekannt.

Der Stuckgips wird über die Leitung 12 zu einem Gas-Gipsseparator 2 zugeführt. Dieser trennt den kalzinierten Gips von dem aus der Kalziniermühle 1 in die Leitung 12 entwichenen Systemabgas. Das Systemabgas wird über eine Abgasleitung 21, eine Druckerhöhungsstufe 22 und eine Leitung 23 zu einem Abluftkamin 29 geführt. Weiter ist an die Leitung 23 eine Rücklaufleitung 24 angeschlossen, über die ein Teil des heißen Systemabgases in die Kalziniermühle 1 zurückgeführt wird. Weiter weist der Separator 2 an seinem Boden einen Auslass für den kalzinierten Gips auf. Er wird über eine Leitung 13 und einer Eingangsschleuse 31 einem Nachreaktor 3 zugeführt. Die Leitungen 12, 13 sind als Thermorohr ausgeführt zum Einstellen der Temperatur des Gipses auf mindestens 95 ° C. Die Temperatureinstellung kann aktiv durch Beheizung oder passiv durch entsprechend gewählte Isolierung ausgeführt sein. Es sei angemerkt, dass die Temperatur des kalzinierten Gipses, wie er aus dem Separator 2 austritt und in den Nachreaktor 3 eintritt, nur wenig verringert wurde, und meist noch etwa 150°C beträgt. Bei einer alternativen Ausführungsform der Erfindung, für die ggf. unabhängiger Schutz beansprucht werden soll, entfällt das Thermorohr und der Gips wird mit beliebiger Temperatur dem Nachreaktor zugeführt.

Der Nachreaktor 3 ist als ein Druckreaktor ausgebildet. Zu diesem Zweck sind die Eingangsschleusen 31 vorgesehen, durch welche der über die Leitung 13 zugeführte kalzinierte Gips in den Nachreaktor 3 gelangt. Die Einlassschleuse 31 ist zu diesem Zweck mit 2 Schiebereinrichtungen versehen, die alternierend betätigt werden. In dem Nachreaktor 3 herrscht ein Überdruck von etwa 0,5 bar; Es ist auch möglich, niedrigere oder größere Überdrücke vorzusehen, insbesondere im Bereich von bis zu 1 bar. In dem Nachreaktor 3 wird der Stuckgips, welcher mit Kristallen in der sogenannten Beta-Modifikation vorliegt, unter Überdruck und Zuführung von Wasserdampf direkt umkristallisiert in eine Kristallform gemäß einer Alpha-Modifikation. Entscheidend ist hierbei eine Kombination aus Überdruck, einer Temperatur die mindestens über der Kalziniertemperatur von Dihydrat (90°C bis 95°C) liegt, sowie der Anwesenheit von angereicherter Feuchtigkeit, insbesondere durch Zuführung von Wasserdampf. Erfindungsgemäß erfolgt so die direkte Umkristallisation des Gipses von der Beta-Modifikation zur Alpha-Modifikation. Die Ausbildung der Kristalle vervollkommnet sich dabei, wobei Fehlstellen in den Kristallen verschlossen werden (heilen). Hierbei verringert sich die BET-Oberfläche auf Werte von weniger als 4 m²/g, wobei sich der Wassergipswert auf Werte wesentlich kleiner als 0,6, beispielsweise ein Wert von 0,4 erniedrigt. Mit dieser Umkristallisation zu Kristallen gemäß der Alpha-Modifikation, wird ein erheblicher Anstieg der Festigkeit des Gipsprodukts erreicht. Es entsteht Hartgips. Besonders bewährt hat sich eine Temperatur im Nachreaktor 3 zwischen 120 °C und 140 °C und ein Druck von 1,65 bis 1,85 bar.

Der somit hergestellte Gips mit Alpha-Modifikation (Hartgips) verlässt den Nachreaktor 3 über den Auslass 33 und eine Ausgangsschleuse 42. Die Ausgangsschleuse 42 bildet einen Teil eines Mengenregelsystems 4, welcher die Menge des auszuschleusenden Hartgipses regelt. Darüber kann sowohl der Füllstand in dem Nachreaktor 3, wie auch die Verweildauer und damit der Umwandlungsprozess im Nachreaktor 3 gesteuert werden. Das Mengenregelsystem 4 weist dazu einen Füllstandssensor 46 auf, welcher in dem Nachreaktor 3 angeordnet ist. Der Sensor 46 kann in an sich bekannter Weise als Radarhöhenmesser ausgebildet sein. Er übermittelt sein Signal an einen Mengenregler 44, an dem Parameter über eine gewünschte Füllhöhe und die gewünschte Verweilzeit als Führungsgrößen einstellbar sind. Der Mengenregler 44 übermittelt in Abhängigkeit von dem durch den Sensor 46 gemessenen Wert Steuersignale, welche über eine Ausgangsleitung 45 an die Schieber der Ausgangsschleuse 42 angelegt sind.

Nach der Ausgangsschleuse 42 wird der noch heiße Hartgips über eine Leitung 15 an ein Eingabeende eines Drehrohrkühlers 5 transportiert. In diesem wird der Hartgips gekühlt, und schließlich über eine Leitung 16 abgeführt.

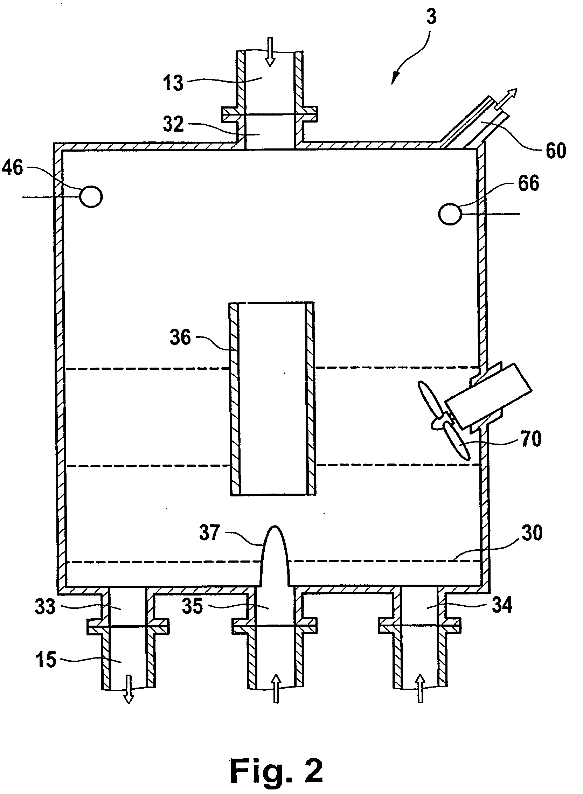

Nachfolgend seien der Nachreaktor 3 und die mit ihm zusammenwirkende Systeme und seine Funktionsweise näher unter Bezugnahme auf Fig. 2 erläutert. Der Nachreaktor 3 weist, außer dem Einlass 32 und Auslass 33 für den umzukristallisierenden Gips, einen Einlass 34 für Fluidisiergas sowie einen Einlass 35 für Prozessgas auf. Weiter ist in dem Inneren des Nachreaktors ein Fluidisierböden 30 angeordnet. Er umfasst im Wesentlichen einen Boden mit darunter angeordneten Hohlkammern zur Zuführung des Fluidisiergas, welches über den Anschluss 34 zugeführt ist. Das Fluidisiergas kann durch Öffnungen in den Fluidisierboden 35 nach oben austreten, und dabei eine auf den Fluidisierboden 35 aufliegende Schicht des zu behandelnden Gips, durchströmen und dabei fluidisieren. Weiter ist in der Mitte des Arbeitsraumes des Nachreaktors 3 ein von unten nach oben verlaufendes Steigrohr 36 vorgesehen. Das Steigrohr 36 ist von einem metallischen Rohrmantel gebildet. Es ist oberhalb des Anschlusses 35 für Prozessgas angeordnet, welcher in einer Düse 37 mündet. Diese Düse ist koaxial mit dem Zentrum des Steigrohrs 36 ausgerichtet. Damit wird erreicht, dass der über den Anschluss 35 zugeführte Prozessgasstrom in das Steigrohr 36 gerichtet wird. Dadurch fällt am unteren Ende des Steigrohrs 36, wo das Prozessgas von der Düse 37 eintritt, der statische Druck ab, wodurch Partikel aus der Umgebung herangesogen werden. Durch den Gasstrom 36 werden sie durch das Steigrohr 36 mit nach oben gerissen, und am oberen Ende wieder über den Innenraum verteilt. Es bildet sich damit eine Umwälzbewegung, welche für eine gute Durchmischung des Guts in den Arbeitsraum sorgt.

Weiter kann noch eine Mischeinrichtung 7 vorgesehen sein, welche den in der Seitenwand des Nachreaktors 3 eingelassene Turbomischer 70 umfasst. Sie sind von einer Steuereinrichtung 73 so angesteuert, dass eine Zerkleinerung der länglichen Kristallstrukturen der Beta-Modifikation zugeführten Gipses erfolgt. Damit wird die Angriffsfläche für die Umwandlung der Kristalle in die Alpha-Modifikation vergrößert. Das Zerkleinern ist insbesondere von Vorteil bei der Bearbeitung von synthetischen Gipsen als Ausgangsmaterial, welche von Haus aus eine markant langgestreckte Kristallform aufweisen. Im dargestellten Ausführungsbeispiel ist aus Gründen der Übersichtlichkeit nur ein Turbomischer 70 dargestellt, es sind vorzugsweise mehrere gleichmäßig über den Umfang verteilte Turbomischer 70 vorgesehen; gegebenenfalls auch in mehreren Etagen.

Das für die Fluidisierung über die Fluidisierböden 35 notwendige Gas kann mit Vorteil aus dem Systemabgas der Kalziniermühle 1 gewonnen werden, welches von dem Separator 2 in die Leitung 23 gespeist wird. Von dort kann es über eine Zapfleitung 91 abgenommen werden, und nach Druckerhöhung mittels einer Gaspumpe 92 über eine Leitung 94 dem Anschluss 34 als Fluidisiergas zugeführt werden. Auf diese Weise wird durch die Zuführung des heißen und feuchtem Systemabgases nicht nur eine Fluidisierung des Guts in dem Nachreaktor 3 erreicht, sondern es wird auch gleichzeitig für eine Druck- und Temperaturerhöhung gesorgt.

Für die Regelung des Drucks in dem Nachreaktor 3 ist ein Regelkreis 6 vorgesehen. Er umfasst ein Steuergerät 62, an welches das von einem Drucksensor 66 gemessene Signal angelegt ist. Das Steuergerät 62 ermittelt ein Ausgangssignal, welches an ein Stellventil 61 zur Regulierung der über eine Leitung 60 aus dem Nachreaktor 3 geführten Abluft ausgebildet ist. Die über die Leitung 60 abgeführte Abluft wird an einen Staubabscheider 63 angelegt. Die vom Staub befreite Abluft wird über einen Schornstein 69 abgeblasen. Der gesammelte Staub wird über eine Zellenradschleuse 64 und eine Leitung 69 der Ausgangsleitung 15 zugeführt. Die Druckregeleinheit 62 ist dazu ausgebildet, bei Ansteuerung des Druckregelventils 61 den Druck im Nachreaktor 3 einzustellen.

Für die Zuführung von Wasserdampf ist ein Wärmetauscher 81 vorgesehen, der zwischen die Leitung 23 und den Abluftkamin 29 für das Systemabgas vorgesehen ist. Mit diesem Systemabgas wird zugeführtes Wasser in dem Wärmetauscher 81 erwärmt, und über eine Leitung 82 einem Dampfkreis 8 zugeführt. Der Dampfkreis 8 umfasst ein Steuergerät 85, welches ein Mischventil 83, zur Bestimmung der Menge und durch Zumischen von Umgebungsluft, auch der Temperatur des zugeführten Dampfes, überwacht. Das so eingestellte Gasgemisch, wird über eine Leitung 84 dem Anschluss 35 für das Prozessgas zugeführt.

Damit können über die einzelnen Systeme der Druck, die Feuchtigkeit sowie die Temperatur in dem Nachreaktor 3 kontrolliert werden. Die Umwandlung des Stuckgipses zu Hartgips kann damit in dem Nachreaktor 3 durchgeführt werden, wobei lediglich Wasser und Systemabgas aus vorgeschalteten Prozessstufen, insbesondere der Kalziniermühle 1, zugeführt zu werden braucht; eine eigenständige Beheizung des Nachreaktors 3 ist nicht erforderlich.

Die an dem Nachreaktor 3 angeordnete Zerkleinerungsanlage 7, mit dem Turbomischer 70, kann ergänzt oder ersetzt werden, durch eine Nachzerkleinerung. Dazu ist nach der Ausgangsschleuse 42 eine Zerkleinerungseinheit 7' vorgesehen, die vor oder hinter dem Drehrohrkühler 5 angeordnet sein kann.

Diese Anlage ermöglicht damit die Durchführung des erfindungsgemäßen Verfahrens, und zwar im kontinuierlichen Betrieb, wie auch (insbesondere bei Vorsehen von zwei Nachreaktoren 3) im chargenweisen Betrieb. Es kann somit zugeführter Stuckgips, welcher von der Kalziniermühle 1, beispielsweise durch Flash-Kalzinierung erzeugt wurde, direkt umkristallisiert werden zu Hartgips, wobei die Beta-Modifikation der Hemihydratkristalle direkt umgewandelt wird, in die Alpha-Modifikation der Hemihydratkristalle, und zwar ohne dass zwischendurch eine Rehydratisierung zu Dihydrat erfolgt. Der Wassergipswert kann damit von Ausgangswerten größer 1 abgesenkt werden, auf Werte wesentlich kleiner als 0,6, und die BET-Oberfläche kann von Ausgangswerten 10 m²/g abgesenkt werden, auf Werte kleiner 3 m²/g.

## Patentansprüche

1. Verfahren zur Herstellung von Hartgips, umfassend:
- Zuführen von Gipsmaterial, das überwiegend aus Beta-Hemihydratgips besteht, zu einem Nachreaktor (3),
- Nachbehandeln im Nachreaktor (3) zur Bildung von Hartgips, wobei der Beta-Hemihydratgips direkt zu Alpha-Hemihydratgips bei einer Temperatur oberhalb der Kalziniertemperatur von 95 °C umgewandelt wird,
- Ausbringen des Hartgipses aus dem Nachreaktor (3) und
- Kühlen,
**gekennzeichnet durch**
Einstellen der Temperatur beim Zuführen des Gipsmaterials zum Nachreaktor (3) auf mindestens die Kalziniertemperatur,
Umwandeln in dem Nachreaktor (3) mit einer Verweilzeit von mehr als 15 Minuten und weniger als 30 Minuten unter Zuführung von Wasserdampf von extern und Regeln der Temperatur sowie des Drucks im Nachreaktor (3) derart, dass die Temperatur mindestens 95 °C beträgt und ein Überdruck zwischen 1,5 bar und 2 bar Absolutdruck herrscht, wobei das Umwandeln im Nachreaktor (3) im kontinuierlichen Betrieb durchgeführt wird.

2. Verfahren nach Anspruch 1, **dadurch gekennzeichnet, dass** der Gips durch eine Druckschleuse (31) in den Nachreaktor (3) ein- und durch eine zweite Druckschleuse (42) ausgebracht wird.

3. Verfahren nach einem der vorangehenden Ansprüche, **dadurch gekennzeichnet, dass** im Nachreaktor (3) eine mechanische Agitation des Gips durchgeführt wird.

4. Verfahren nach Anspruch 3, **dadurch gekennzeichnet, dass** die mechanische Agitation ein Homogenisieren vorzugsweise mittels im Nachreaktor (3) angeordneter Mischer (70) umfasst.

5. Verfahren nach einem der vorangehenden Ansprüche, **gekennzeichnet durch** Zuführen von heißem Fluidisiergas in den Nachreaktor(3).

6. Verfahren nach einem der vorangehenden Ansprüche, **gekennzeichnet durch** ein Vorbehandeln, bei dem Dihydratgips als Ausgangsmaterial kalziniert wird zu dem Gipsmaterial mit überwiegend Beta-Hemidhydratgips.

7. Verfahren nach Anspruch 8, **dadurch gekennzeichnet, dass** dem Nachreaktor (3) heißes Systemabgas von dem Kalzinieren zugeführt wird.

8. Verfahren nach einem der vorhergehenden Ansprüche, **dadurch gekennzeichnet, dass** der Wasserdampf über ein durch Systemabgase beheizten Wärmetauscher (81) erwärmt wird.

9. Verfahren nach einem der vorangehenden Ansprüche, **dadurch gekennzeichnet, dass** bei der Nachbehandlung eine spezifische Oberfläche (BET) von höchstens 4 m²/g und/oder ein Wasser-Gipswert von kleiner als 0,6, vorzugsweise kleiner als 0,5 erreicht wird.

10. Verfahren nach einem der vorangehenden Ansprüche, **dadurch gekennzeichnet, dass** das Verfahren bis auf die Zufuhr von Wasserdampf in den Nachreaktor (3) trocken durchgeführt wird.

11. Kalzinieranlage zum Herstellen von Hartgips umfassend einen Brenner (1) zum Kalzinieren von Dihydratgips als Ausgangsmaterial, einem in Prozesslaufrichtung dahinter liegenden gesonderten Nachreaktor (3), die beide über ein Transportmittel (12,13) für gebrannten Beta-Hemihydratgips verbunden sind
**dadurch gekennzeichnet, dass**
das Transportmittel thermisch so ausgelegt ist, dass der Beta-Hemihydratgips mit einer Temperatur von mindestens 95 °C dem Nachreaktor (3) zugeführt wird, wobei der Nachreaktor (3) mindestens einen weiteren Anschluss (34, 35) zum Zuführen von Feuchte und Hitze von extern aufweist, und eine Steuereinrichtung (62,85) vorgesehen ist, die mit einem Dampfkreis (8) derart zusammenwirkt, um bei einem Überdruck zwischen 1,5 bar und 2 bar Absolutdruck und einer Temperatur über 95 °C eine Verweilzeit im Nachreaktor (3) von mehr als 15 Minuten und höchstens 30 Minuten einzustellen, wobei der Nachreaktor (3) für einen kontinuierlichen Betrieb ausgebildet ist.

12. Kalzinieranlage nach Anspruch 11, **dadurch gekennzeichnet, dass** am Nachreaktor erste und zweite Druckschleusen (31, 42) zur Zufuhr und Abfuhr im Durchlaufbetrieb vorgesehen sind.

13. Kalzinieranlage nach Anspruch Anspruch 11 oder 12, **dadurch gekennzeichnet, dass** sie nach einem der Ansprüche 2 bis 10 weitergebildet ist.

14. Nachrüstreaktor für Kalzinieranlagen zum Herstellen von Hartgips aus bereits kalzinierten Beta-Hemihydratgips
**dadurch gekennzeichnet, dass**
Anschlüsse (34, 35) zum Zuführen von feuchtem und heißem Gas und weiter eine Steuereinrichtung (62, 85) vorgesehen sind, die dazu ausgebildet ist, im Nachrüstreaktor (3) einen Überdruck und eine Temperatur über Kalziniertemperatur zu halten, und
in der Mitte des Arbeitsraumes des Nachreaktors (3) ein von unten nach oben verlaufendes Steigrohr (36) vorgesehen ist, dessen Zentrum koaxial mit einer Düse (37), in die einer der Anschlüsse (35) zum Zuführen von feuchtem und heißem Gas mündet, ausgerichtet ist.

15. Nachrüstreaktor nach Anspruch 14, **dadurch gekennzeichnet, dass** er nach einem der Ansprüche 2, 3 oder 4 weitergebildet ist.

## Claims

1. Method for the production of hard plaster, comprising:
- a feed of plaster material, composed predominantly of beta-hemihydrate plaster, to a postreactor (3),
- retreatment in the postreactor (3) to form hard plaster, the beta-hemihydrate plaster being converted directly into alpha-hemihydrate plaster at a temperature above the calcining temperature of 95°C,
- discharge of the hard plaster out of the postreactor (3), and
- cooling,
**characterized by**
setting of the temperature during the feed of the plaster material to the postreactor (3) to at least the calcining temperature,
conversion in the postreactor (3) with a dwell time of more than 15 minutes and less than 30 minutes, with steam being supplied externally, and regulation of the temperature and pressure in the postreactor (3) in such a way that the temperature amounts to at least 95°C and an overpressure of between 1.5 bar and 2 bar absolute pressure prevails, wherein the conversion is carried out in the postreactor (3) during continuous operation.

2. Method according to Claim 1, **characterized in that** the plaster is introduced into the postreactor (3) by means of one pressure lock (31) and is discharged from it by means of a second pressure lock (42).

3. Method according to one of the preceding claims, **characterized in that** mechanical agitation of the plaster is carried out in the postreactor (3).

4. Method according to Claim 3, **characterized in that** mechanical agitation comprises homogenization preferably by means of mixers (70) arranged in the postreactor (3).

5. Method according to one of the preceding claims, **characterized by** the supply of hot fluidizing gas into the postreactor (3).

6. Method according to one of the preceding claims, **characterized by** pretreatment in which dihydrate plaster as starting material is calcined into the plaster material having predominantly beta-hemihydrate plaster.

7. Method according to Claim 8, **characterized in that** hot system exhaust gas from calcining is supplied to the postreactor (3).

8. Method according to one of the preceding claims, **characterized in that** the steam is heated via a heat exchanger (81) heated by system exhaust gases.

9. Method according to one of the preceding claims, **characterized in that**, during pretreatment, a specific surface (BET) of at most 4 m²/g and/or a water/plaster value of lower than 0.6, preferably lower than 0.5, is/are achieved.

10. Method according to one of the preceding claims, **characterized in that** the method is carried out under dry conditions with the exception of the supply of steam into the postreactor (3).

11. Calcining plant for the production of hard plaster, comprising a burner (1) for the calcining of dihydrate plaster as starting material, and a separate postreactor (3) lying downstream in the direction of run of the process, which are both connected via a transport means (12, 13) for burnt beta-hemihydrate plaster,
**characterized in that**
the transport means is designed in thermal terms such that the beta-hemihydrate plaster is fed to the postreactor (3) at a temperature of at least 95°C, the postreactor (3) having at least one further connection (34, 35) for the supply of moisture and heat externally, and a control device (62, 85) being provided, which interacts with a steam circuit (8) in such a way as to set a dwell time in the postreactor (3) of more than 15 minutes and at most 30 minutes with an overpressure of between 1.5 bar and 2 bar absolute pressure and a temperature of above 95°C, wherein the postreactor (3) is configured for continuous operation.

12. Calcining plant according to Claim 11, **characterized in that** first and second pressure locks (31, 42) for supply and discharge in continuous flow operation are provided on the postreactor.

13. Calcining plant according to Claim Claim 11 or 12, **characterized in that** it is developed according to one of Claims 2 to 10.

14. Retrofit reactor for calcining plants for the production of hard plaster from already calcined beta-hemihydrate plaster,
**characterized in that**
connections (34, 35) for the supply of moist and hot gas and, further, a control device (62, 85) are provided, which control device is designed for maintaining overpressure and a temperature above the calcining temperature in the retrofit reactor (3), and
a riser pipe (36) running from below upward is provided in the middle of the working space of the postreactor (3), the center of which riser pipe is aligned coaxially with a nozzle (37) into which one of the connections (35) for feeding moist and hot gas issues.

15. Retrofit reactor according to Claim 14, **characterized in that** it is developed according to one of Claims 2, 3 or 4.

## Revendications

1. Procédé de fabrication de plâtre dur, comprenant:
- introduction de matériau de plâtre, constitué majoritairement de plâtre bétâ hémihydrate, dans un post-réacteur (3);
- post-traitement dans le post-réacteur (3) pour la formation de plâtre dur, le plâtre bétâ hémihydrate étant transformé directement en plâtre alpha hémihydrate à une température supérieure à la température de calcination de 95°C,
- prélèvement du plâtre dur hors du post-réacteur (3) et
- refroidissement
**caractérisé par**
le réglage de la température lors de l'introduction du matériau de plâtre dans le post-réacteur (3) à au moins la température de calcination,
transformation, dans le post-réacteur (3), avec un temps de séjour de plus de 15 minutes et de moins de 30 minutes, en introduisant de la vapeur d'eau de l'extérieur et régulation de la température ainsi que de la pression dans le post-réacteur (3), de façon à ce que la température soit d'au moins 95°C et qu'une pression entre 1,5 bar et 2 bar de pression absolue règne, la transformation dans le post-réacteur (3) étant effectuée en continu.

2. Procédé selon la revendication 1, **caractérisé en ce que** le plâtre est introduit à travers un sas de pression (31) dans le post-réacteur (3) et évacué à travers un deuxième sas de pression (42).

3. Procédé selon l'une des revendications précédentes, **caractérisé en ce que**, dans le post-réacteur (3), a lieu une agitation mécanique du plâtre.

4. Procédé selon la revendication 3, **caractérisé en ce que** l'agitation mécanique comprend une homogénéisation de préférence au moyen de mélangeurs (70) disposés dans un post-réacteur (3).

5. Procédé selon l'une des revendications précédentes, **caractérisé par** l'introduction d'un gaz de fluidification très chaud dans le post-réacteur (3).

6. Procédé selon l'une des revendications précédentes, **caractérisé par** un pré-traitement, dans lequel du plâtre dihydrate en tant que matériau de départ est calciné afin de le transformer en matériau de plâtre avec majoritairement du plâtre bétâ hémihydrate.

7. Procédé selon la revendication 8, **caractérisé en ce que**, dans le post-réacteur (3), un gaz d'échappement du système très chaud est introduit avant la calcination.

8. Procédé selon l'une des revendications précédentes, **caractérisé en ce que** la vapeur d'eau est chauffée par l'intermédiaire d'un échangeur de chaleur (81) chauffé par des gaz d'échappement du système.

9. Procédé selon l'une des revendications précédentes, **caractérisé en ce que**, lors du post-traitement, une surface spécifiques (BET) de 4m²/g maximum et/ou une valeur eau-plâtre inférieure à 0,6, de préférence inférieure à 0,5 est atteinte.

10. Procédé selon l'une des revendications précédentes, **caractérisé en ce que** le procédé est effectué à sec jusqu'à l'introduction de vapeur d'eau dans le post-réacteur (3).

11. Installation de calcination pour la fabrication de plâtre dur, comprenant un brûleur (1) pour la calcination de plâtre dihydrate en tant que matériau de départ, un post-réacteur (3) séparé se trouvant derrière dans la direction du processus, qui sont reliés tous les deux par l'intermédiaire d'un moyen de transport (12, 13) pour le plâtre bétâ hémihydrate brûlé
**caractérisé en ce que**
le moyen de transport est conçu thermiquement de façon à ce que le plâtre bétâ hémihydrate est introduit dans le post-réacteur (3) avec une température d'au moins 95°C, le post-réacteur (3) comprenant au moins un raccord supplémentaire (34, 35) pour l'introduction d'humidité et de chaleur de l'extérieur, et un dispositif de commande (62, 85) est prévu, qui interagit avec un circuit de vapeur (8) de façon à régler, à une surpression entre 1,5 bar et 2 bar de pression absolue et à une température supérieure à 95°C, un temps de séjour dans le post-réacteur (3) de plus de 15 minutes et de 30 minutes maximum, le post-réacteur (3) étant conçu pour un fonctionnement continu.

12. Installation de calcination selon la revendication 11, **caractérisé en ce que**, sur le post-réacteur, un premier et un deuxième sas de pression (31, 42) sont prévus pour l'introduction et l'évacuation en fonctionnement continu.

13. Installation de calcination selon la revendication 11 ou 12, **caractérisé en ce qu'**elle est développée selon l'une des revendications 2 à 10.

14. Post-réacteur pour installations de calcination pour la fabrication de plâtre dur constitué de plâtre bétâ hémihydrate déjà calciné
**caractérisé en ce que**
des raccords (34, 35) pour l'introduction d'un gaz humide et très chaud et un dispositif de commande (62, 85) sont prévus, qui sont conçus pour maintenir, dans le post-réacteur (3) une surpression et une température supérieure à la température de calcination, et
au centre de l'espace de travail du post-réacteur (3), se trouve un tube ascendant (36) s'étendant du bas vers le haut est prévu, dont le centre est coaxial avec une buse (37) dans laquelle débouche un des raccords (35) pour l'introduction de gaz humide et très chaud.

15. Post-réacteur selon la revendication 14, **caractérisé en ce qu'**il est développé selon l'une des revendications 2, 3 ou 4.
